# EUROPÄISCHE PATENTSCHRIFT

(11) **EP 0 268 904 B1**
(45) Veröffentlichungstag und Bekanntmachung des Hinweises auf die Patenterteilung: **16.02.1994**
(21) Anmeldenummer: 87116386.1
(22) Anmeldetag: 06.11.1987
(51) Int. Cl.: F16H 57/04, B60K 17/346

(54) **Getriebe mit einer Einrichtung zur Schmierölversorgung**
Transmission with means for lubricating oil supply
Transmission avec dispositif d'alimentation pour huile de lubrification

(30) Priorität: 10.11.1986 DE 3638351; 18.02.1987 DE 3705064
(43) Veröffentlichungstag der Anmeldung: 01.06.1988
(73) Patentinhaber: GETRAG Getriebe- und Zahnradfabrik GmbH, D-71636 Ludwigsburg (DE)
(72) Erfinder: Rühle, Günter, D-7121 Bietigsheim-Bissingen (DE); Alff, Gerhard, D-7000 Stuttgart 31 (DE)
(74) Vertreter: Witte, Alexander, Dr.-Ing.

(56) Entgegenhaltungen:
- DE-A- 3 422 048
- DE-B- 2 150 676
- DE-C- 2 033 271
- DE-C- 2 946 293
- GB-A- 1 340 593
- GB-A- 2 166 816
- US-A- 3 083 790
- US-A- 3 441 106
- US-A- 4 560 056
- SOVIET INVENTIONS ILLUSTRATED Section M, week K 43, 7th December 1983, abstract no. 799733, Q64; & SU-A-983 361 (SAFONOV) 23.12.1982
- Automobiltechnische Zeitschrift ATZ 88 (1986), Seiten 345, 346

## Beschreibung

Die Erfindung betrifft ein Getriebe, insbesondere Verteilergetriebe für Vierrad-Antriebe von Kraftfahrzeugen, mit mindestens zwei zueinander konzentrischen Wellen und einer Einrichtung zur Schmierölversorgung, die zu den einzelnen Schmierstellen führende Kanäle und Mittel zum Zuführen des Schmieröls zu diesen Kanälen umfaßt, wobei ein Kanal von dem Spalt zwischen den beiden konzentrischen Wellen gebildet wird, der an einem Ende der äußeren der beiden Wellen in einen die innere Welle umgebenden Ringraum mündet, der vom Getriebegehäuse, der inneren Welle und der Stirnseite der äußeren der beiden Wellen gebildet ist und an den die Mittel zum Zuführen des Schmieröles angeschlossen sind und die äußere Getriebewelle an der dem Ringraum gegenüberliegenden Seite zu Schmierstellen führende, radiale Durchbrechungen aufweist.

Ein Getriebe der vorstehend genannten Art ist aus dem Dokument US-A-4 560 056 bekannt. Das bekannte Getriebe umfaßt eine Hinterachs-Antriebswelle, die in ein Kegelrad ausläuft. Das Kegelrad kämmt mit einem weiteren Kegelrad, das koaxial zur Hinterachse angeordnet ist. In dem weiteren Kegelrad sind die Enden der zu den beiden Hinterrädern führenden Halbachsen gelagert. Im Bereich dieser Lagerung sind die Halbachsen mit spiraligen Förderrinnen versehen. Die Förderrinnen bewirken, daß Schmiermittel von einem Ringraum auf der Außenseite der Kegelräder nach innen in einen weiteren Ringraum gefördert wird. Von diesem Ringraum kann das Schmiermittel u.a. durch einen Spalt fließen, der sich zwischen einer Innenfläche des weiteren Kegelrades und einer Außenfläche eines Körpers befindet, der mittels einer Keilverzahnung auf dem inneren Ende der Halbachsen sitzt. Dieser Spalt erstreckt sich zunächst in axialer und dann in radialer Richtung. Auf diese Weise wird ein Schmiermittelsystem geschaffen, bei dem das Schmiermittel einerseits mittels Zentrifugalkräften nach außen geschleudert und dann mittels eines Kanalsystems zu verschiedenen Schmierstellen des Getriebes geleitet wird. Dabei wird der Schmiermittelfluß von den spiraligen Förderrinnen unterstützt, die in den genannten Abschnitt der Halbachsen eingebracht sind.

Bei einem in der "Automobiltechnischen Zeitschrift ATZ" 88 (1986), Seiten 345, 346 beschriebenen Getriebe erfolgt der Antrieb einer Gelenkwelle über zwei Zahnradstufen, von denen eine gleichzeitig als Ölpumpe für die Schmierölversorgung des Getriebes wirkt. Soweit es diese Veröffentlichung erkennen läßt, erfolgt die Verteilung des Schmieröles zu den einzelnen Schmierstellen über außerhalb des Getriebegehäuses angeordnete Leitungen. Die Anbringung solcher Leitungen erfordert einen erheblichen Aufwand, und es haben die Leitungen den weiteren Nachteil, daß sie in der Umgebung des Getriebes zusätzlichen Platz beanspruchen und außerdem störanfällig sind, insbesondere im Hinblick auf die Vielzahl ihrer abzudichtenden Verbindungen.

Aus dem Dokument US-A-3 441 106 ist ein weiteres Getriebe bekannt, bei dem Zahnräder des Getriebes dazu benutzt werden, über in das Gehäuse integrierte Kanäle das Öl einem oberen Sammelraum zuzuführen, von dem aus das Öl praktisch drucklos auf die verschiedenen Schmierstellen fließen kann. Dabei weisen zueinander koaxiale Wellenabschnitte miteinander fluchtende, zentrale Bohrungen auf, die ebenfalls der Ölverteilung dienen. Auch die Anbringung solcher Bohrungen erfordert wieder einen erheblichen Arbeitsaufwand. Darüber hinaus dürfte es schwierig sein, eine solche zentrale Bohrung ausreichend mit Schmieröl zu versorgen, wenn es über eine Ringnut am Umfang einer der Wellen zugeführt wird, wie es bei dem bekannten Getriebe der Fall ist, da die bei der Drehung der Welle auftretenden Zentrifugalkräfte einem Eintritt des Öles in die radialen Bohrungen entgegenwirken, welche die Ringnut mit der zentralen Bohrung verbinden.

Aus dem Dokument DE-C-29 46 293 ist es ebenfalls bekannt, ein tiefgelegenes Zahnrad des Getriebes als Ölpumpe zu verwenden, um das Öl durch einen in das Gehäuse integrierten Kanal an eine hochgelegene Stelle zu fördern, von der das Schmieröl dann über zu schmierende Stellen hinweg wieder in den Sumpf zurückfließen kann. Auch hier ist wieder charakteristisch, daß die Lagerstellen so weit offen sind, daß sie von dem drucklos zufließenden Schmieröl erreicht werden können.

Bei Getrieben mit zueinander koaxial angeordneten Wellen, die sich auf einer erheblichen Länge durchdringen, wie sie insbesondere bei Verteilergetrieben für Vierrad-Antriebe von Kraftfahrzeugen vorkommen, besteht ein gewisses Problem darin, Schmierstellen zu erreichen, die sich im Bereich dieser koaxialen Wellen befinden. Dies kann insbesondere durch axiale Bohrungen in den Wellen erfolgen, wie es aus dem oben erwähnten Dokument US-A-3 441 106 bekannt ist, jedoch erfordert die Anbringung solcher Bohrungen und ihr Anschluß an die Mittel zum Zuführen des Schmieröls besondere Maßnahmen, welche die Herstellung eines solchen Getriebes verteuern. Gleichzeitig besteht wegen der erwähnten, beim Betrieb auftretenden Zentrifugalkräfte die Gefahr einer unzureichenden Schmierölversorgung.

Demgemäß liegt der Erfindung die Aufgabe zugrunde, die Einrichtung zur Schmierölversorgung eines Getriebes mit zueinander koaxialen Wellen zu vereinfachen und zugleich ihre Betriebssicherheit zu erhöhen.

Diese Aufgabe wird nach der Erfindung dadurch gelöst, daß am Übergang von dem Ringraum zu dem Spalt eine Hülse in einer ringförmigen Aussparung der äußeren Welle angeordnet ist, deren Innenseite mit einer schraubenförmigen Profilierung versehen ist und die die innere Welle auf einem Teil ihrer Länge umgibt, wobei die Hülse am Getriebegehäuse drehfest gehalten ist.

Obwohl die mit der schraubenförmigen Profilierung versehene Hülse selbst keine Bewegung ausführt, hat sie in Verbindung mit der rotierenden inneren Welle die Wirkung einer Förderschnecke, da das sich in dem die innere Welle umgebenden Ringraum befindende Öl durch die Reibung an der Oberfläche der inneren Welle in Rotation versetzt wird, und dadurch das in den Spalt zwischen Hülse und innerer Welle umlaufende Schmieröl beim Anlaufen an die schraubenförmige Profilierung eine Bewegung in Axialrichtung der Wellen erhält, also in den Spalt zwischen den beiden Wellen gefördert wird. Damit wird Schmieröl, das dem Ringraum im wesentlichen drucklos zugeführt wird, unter Druck in den Spalt zwischen den beiden Wellen eingeleitet und von da aus dann über die weiteren Kanäle den einzelnen Schmierstellen zugeführt. Daher wird bei dieser Ausgestaltung der Erfindung unabhängig von den Mitteln, welche das Schmieröl dem Ringraum zuführen, eine sehr wirkungsvolle Schmierung des Getriebes gewährleistet. Gleichzeitig wird deutlich, daß mit "schraubenförmige Profilierung" alle durch Rippen, Nuten u. dgl. gebildeten Hindernisse gemeint sind, die dem an der Oberfläche der inneren Welle anhaftenden und mit dieser Welle rotierenden Schmieröl eine axiale Bewegungskomponente erteilen.

Bei der Erfindung greift ferner die Hülse in eine Aussparung am äußeren Ende der äußeren Welle ein. Auf diese Weise ist es möglich, ihre Oberfläche unmittelbar in Verlängerung der Innenfläche der äußeren Hohlwelle anzuordnen, so daß ein möglichst stoßfreier Übergang zu dem Spalt zwischen den beiden Wellen gewährleistet ist. Zugleich kann die Baulänge des Getriebes sehr kurz gehalten werden, da die in die äußere Welle eingreifende Hülse nicht wesentlich zur Baulänge des Getriebes beiträgt.

Die Hülse kann vorteilhaft von einem im Getriebegehäuse befestigten Bauteil gebildet werden, das einen die Wand des Ringraumes bildenden Flansch aufweist, der auch gleichzeitig zur Befestigung der Hülse im Getriebegehäuse dienen kann. So kann insbesondere der Rand des Flansches zwischen dem äußeren Ring eines am Ende der äußeren Welle angeordneten Wälzlagers und einem benachbarten Abschnitt des Getriebegehäuses eingespannt und auch mit dem Gehäuse verklebt sein. Besonders vorteilhaft ist die Ausbildung der Hülse als Verbundbauteil aus einem nicht-metallischen Werkstoff, vorzugsweise einem Elastomer, und einem den Flansch bildenden metallischen Ring, vorzugsweise aus Stahl. Nicht-metallische Werkstoffe, insbesondere Kunststoffe, lassen sich leicht als Spritzteile mit beliebiger und daher optimaler Profilierung herstellen, während die Verbindung mit einem vorzugsweise aus Stahl bestehenden, metallischen Ring eine einwandfreie Befestigung des Verbundbauteiles an dem metallischen Getriebegehäuses gewährleistet.

Wie bereits erwähnt, besteht ein besonderer Vorteil der Erfindung darin, daß das Schmieröl dem an die äußere Welle angrenzenden Ringraum im wesentlichen drucklos zugeführt werden kann, die Mittel zum Zuführen des Schmieröles also förderwirksame Getriebeelemente umfassen können, die über in das Getriebegehäuse integrierte Hohlräume mit dem Ringraum in Verbindung stehen. Die Möglichkeit, dem Ringraum das Schmieröl drucklos zuzuführen, beschränkt sich dabei nicht auf die Verwendung von Zahnrädern des Getriebes als förderwirksame Getriebeelemente. Vielmehr sieht eine vorteilhafte Ausführungsform der Erfindung vor, daß die äußere Welle mit einem Kettenantrieb versehen ist, dessen Kette bis in den Ölsumpf des Getriebegehäuses reicht, und daß neben dem am Ende der äußeren Welle angeordneten Kettenrad dieses Kettenantriebes im Getriebegehäuse eine zur Achse der äußeren Welle im wesentlichen parallele Ölfangrinne angeordnet ist, die mit dem Ringraum mit Gefälle in Verbindung steht. Bei dieser Ausführungsform der Erfindung wird also das von der Kette mitgeführte Öl an deren oberem Ende infolge der durch das Kettenrad bewirkten Umlenkung der Bewegungsrichtung abgeschleudert und gelangt so in die Ölfangrinne, von der es dann über geeignete Verbindungen dem Ringraum zufließen kann. Dieser Zufluß erfolgt unter dem Einfluß der Schwerkraft durch Kanäle oder Öffnungen hindurch, die einen entsprechend großen Querschnitt haben.

Selbstverständlich können aber auch bei einem nach der Erfindung ausgebildeten Getriebe in der bereits erwähnten, an sich bekannten Weise Gehäusewände zu mindestens einem in den Ölsumpf des Getriebegehäuses eintauchenden Zahnrad derart dicht benachbart angeordnet sein, daß das Zahnrad als Ölpumpe wirkt. Der Druckraum dieser Ölpumpe kann dann über in das Gehäuse integrierte Kanäle mit dem Ringraum in Verbundung stehen. Besonders vorteilhaft kann die Ölpumpe zwei miteinander in Eingriff stehende Zahnräder umfassen, derart, daß sich der Druckraum im Bereich zwischen den beiden Zahnrädern befindet. Bei einer solchen Ausführungsform der Erfindung wird auch von den beiden Zahnrädern in dem geförderten Schmieröl ein gewisser Druck aufgebaut, der es ermöglicht, schon von den den Druckraum mit dem Ringraum verbindenen Kanälen weitere zu Schmierstellen führende Kanäle abzuzweigen.

Die Erfindung wird im folgenden anhand der in der Zeichnung dargestellten Ausführungsbeispiele näher beschrieben und erläutert. Es zeigen
- Fig. 1: einen Querschnitt durch ein erstes, nach der Erfindung ausgebildetes Verteilergetriebe,
- Fig. 2: einen Schnitt längs der Linie II-II durch das Getriebe nach Fig. 1,
- Fig. 3: einen Längsschnitt durch die in das Getriebe nach den Fig. 1 und 2 eingebaute Hülse,
- Fig. 4: einen Querschnitt durch eine weitere Ausführungsform eines nach der Erfindung ausgebildeten Verteilergetriebes und
- Fig. 5: einen Schnitt längs der Linie V-V durch das Getriebe nach Fig. 4.

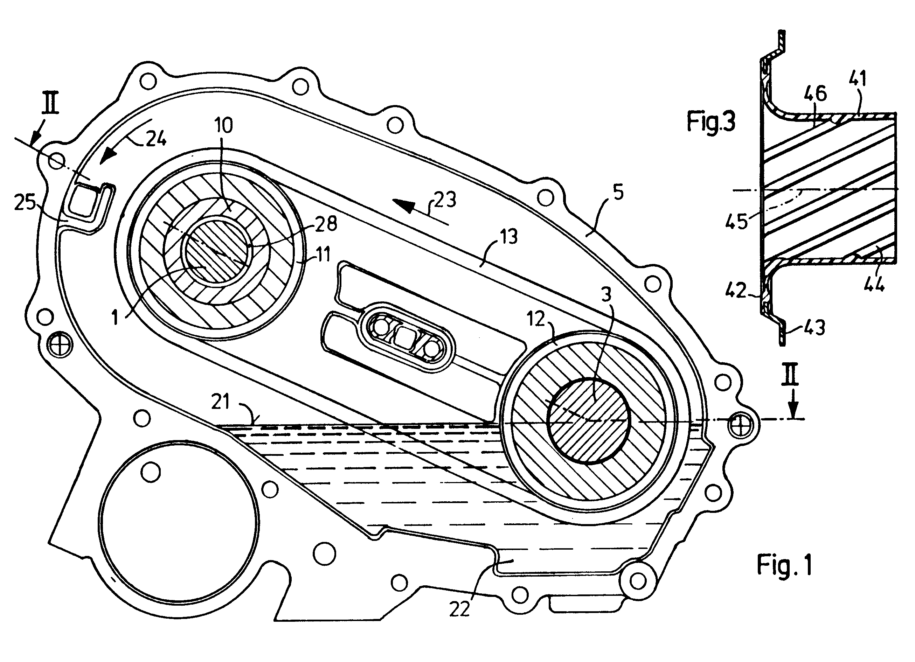

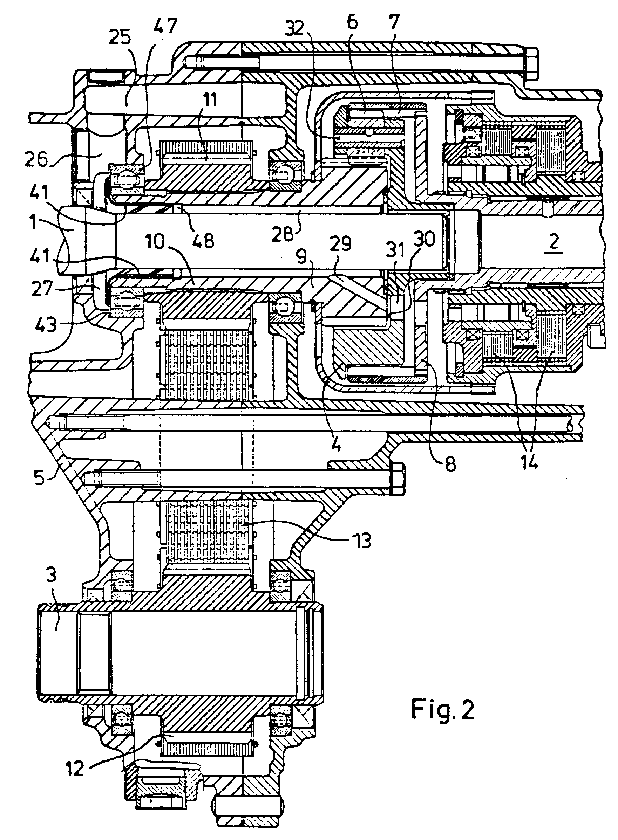

Bei dem in den Fig. 1 und 2 dargestellten Getriebe handelt es sich um ein als Planetengetriebe ausgebildetes Differentialgetriebe mit einer Eingangswelle 1, einer in Verlängerung der Eingangswelle angeordneten ersten Ausgangswelle 2 und einer dazu parallelen zweiten Ausgangswelle 3. Das Differentialgetriebe umfaßt einen Planetenradträger 4, der auf das sich innerhalb des Getriebegehäuses 5 befindende Ende der Eingangswelle 1 aufgesteckt ist. Die im Planetenradträger 4 gelagerten Planetenräder 6 kämmen einerseits mit dem Innenrad 7, das mittels eines Flansches 8 an dem sich innerhalb des Getriebegehäuses 5 befindenden Ende der ersten Ausgangswelle 2 befestigt ist, und mit dem Sonnenrad 9, das sich an dem Ende einer zur Eingangswelle 1 koaxialen Hohlwelle 10 befindet, die nahe ihrem anderen Ende ein Kettenrad 11 trägt. Die zweite Ausgangswelle 3 ist im Getriebegehäuse 5 parallel zur Eingangswelle 1 gelagert und ebenfalls mit einem Kettenrad 12 versehen, das mit dem auf der Hohlwelle 10 angeordneten Kettenrad 11 fluchtet und mit diesem durch eine Antriebskette 13 verbunden ist. Dieses Differentialgetriebe ist als Verteilergetriebe für ein Kraftfahrzeug mit Vierrad-Antrieb bestimmt und weist eine zwischen die erste Ausgangswelle 2 und die mit der zweiten Ausgangswelle 3 verbundene Hohlwelle 10 geschaltete Viskosekupplung 14 als Differentialsperre auf.

Wie aus Fig. 2 ersichtlich, ist die mittels der Kette 13 angetriebene zweite Abtriebswelle 3 im Getriebegehäuse 5 tiefer angeordnet als die koaxiale Anordnung, welche die Eingangswelle 1, die erste Ausgangswelle 2 und die das Sonnenrad 9 tragende Hohlwelle 10 umfaßt. Die im Getriebegehäuse 5 vorgesehene Ölfüllung reicht nur bis etwa zur Achshöhe der unteren, zweiten Ausgangswelle. Die Höhe des Ölspiegels 21 ist entsprechend in Fig. 1 dargestellt. Zur Versorgung der höher liegenden Getriebeteile wird bei dem Getriebe nach den Fig. 1 und 2 die Mitnahme des Schmieröles aus dem Sumpf 22 durch die Kette 13 ausgenützt. Das die Oberfläche der Kette benetzende und in den Zwischenräumen zwischen den Kettengliedern haftende Öl wird von der in Fig. 1 entgegen dem Uhrzeigersinn in Richtung des Pfeiles 23 umlaufenden Kette mitgenommen und bei Erreichen des oberen Kettenrades 11 infolge der dann eintretenden Richtungsänderung der Kette 13 gegen die Wand des Getriebegehäuses 5 geschleudert, an der es in Richtung des Pfeiles 24 hinabrinnt und so in eine an der Innenwand des Getriebegehäuses 5 angebrachte Ölfangrinne 25 gelangt, die sich im wesentlichen parallel zur Achse der Wellen 1 und 10 erstreckt. Das gefangene Schmieröl rinnt dann durch eine an einem Ende der Ölfangrinne 25 angebrachte Öffnung 26 in einen Ringraum 27, der sich am Ende der Hohlwelle 10 befindet und die aus der Hohlwelle 10 herausragende Eingangswelle 1 umgibt. Von diesem Ringraum aus kann das Schmieröl in den Spalt 28 eintreten, der sich zwischen der von der Eingangswelle 1 gebildeten inneren Welle und der von der Hohlwelle 10 gebildeten äußeren Welle befindet. Die äußere Welle 10 weist nahe ihrem anderen, mit dem Sonnenrad 9 versehenen Ende einen schrägen Kanal 29 auf, der den Spalt 28 zwischen den beiden Wellen 1, 10 mit einem Spalt 30 verbindet, der sich zwischen der Stirnfläche des Sonnenrades 9 und dem benachbarten Planetenradträger 4 befindet. Über diesen Spalt 30 sowie über in dem Planetenradträger 4 angeordnete Axialbohrungen 31 erreicht das Schmieröl die Lagerstellen im Bereich zwischen der Nabe des Planetenradträgers 4 und der angrenzenden ersten Ausgangswelle 2 als auch die miteinander ein Eingriff stehenden Zahnungen der Planetenräder 6 und des Innenrades 7 sowie des Sonnenrades 9. Auch die Lagerungen der Planetenräder 6 selbst werden dann über die zur Lagerung dieser Planetenräder dienenden Hohlachsen 32 erreicht. Es ist ersichtlich, daß durch die Ausnutzung des von den beiden koaxialen Wellen 1, 10 gebildeten, ringförmigen Spaltes 28 auf sehr einfache Weise eine wirksame Verteilung des Schmieröles auf die verschiedenen lagerstellen erreicht werden kann, ohne daß dazu eine komplizierte Ausbildung der Einrichtung zur Schmierölversorgung erforderlich wäre. Insbesondere erspart es die Verwendung des Spaltes 28 zwischen der inneren Welle 1 und der äußeren Welle 10, komplizierte Kanäle für die Ölverteilung innerhalb oder gar außerhalb des Gehäuses vorzusehen.

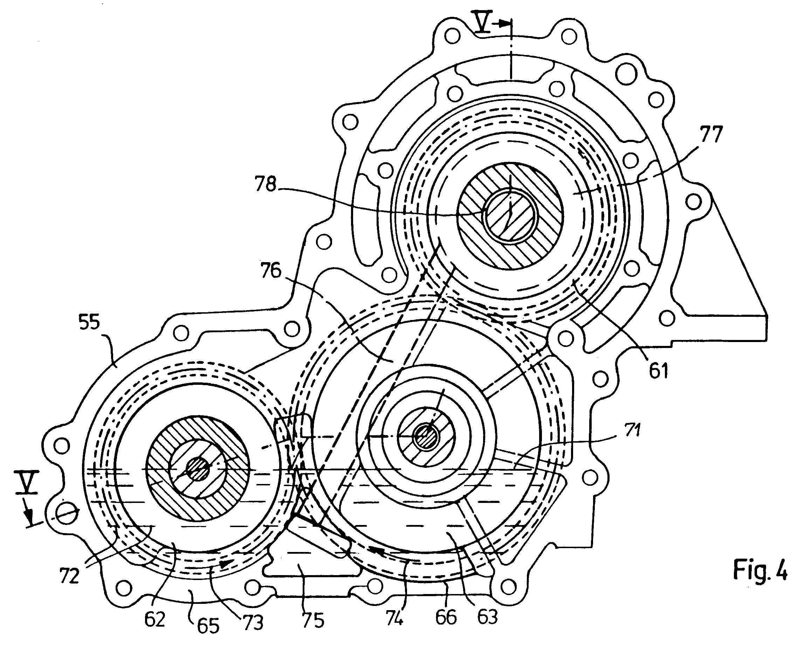

Der Transport des Schmieröles durch den relativ engen Spalt 28 zwischen der inneren Welle 1 und der äußeren Welle 10 wird durch ein Förderglied in Form einer Hülse 41 unterstützt, die in Fig. 3 gesondert dargestellt ist. Diese Hülse 41 besteht aus einem im wesentlichen zylindrischen Kunststoffteil 41, das an einem Ende in einen Flanschabschnitt 42 übergeht, mit dessen Rand ein gekröpfter Metallring 43 verbunden ist, der vorzugsweise aus Stahl besteht. Die Verbindung zwischen dem Ring 43 und dem Flansch 42 ist durch Umspritzen des inneren Randes des Ringes 43 hergestellt. An der Innenfläche der Hülse 41 befinden sich im Abstand voneinander angeordnete Rippen 44, die sich bis in den Bereich des Flansches 42 hinein erstrecken und gegenüber der Achsrichtung 45 der Hülse schräg gestellt sind, wie es die schrägen Linien 46 andeuten. Auf diese Weise entsteht an der Innenseite der Hülse 41 ein schraubenartiges Profil, das im Zusammenwirken mit der Oberfläche der die Hülse durchsetzenden inneren Welle 1 die Wirkung einer Förderschnecke hat, weil das in dem Ringraum 27 enthaltene, mehr oder weniger zähflüssige Schmieröl an der Oberfläche der inneren Welle 1 haftet, also von dieser Welle mitgenommen und in Rotation versetzt wird. Daher entsteht zwischen dem umlaufenden Schmieröl und der stillstehenden Hülse 41 eine Relativbewegung, die der Relativbewegung zwischen einer umlaufenden Schnecke und einem ruhenden Medium entspricht, so daß auch hier dem Medium, also dem Schmieröl, eine Axialbewegung erteilt wird. Bei den engen Spalten zwischen der Oberfläche der inneren Welle 1 und der Hülse 41 und den relativ hohen Drehgeschwindigkeiten der Welle kommt es zu einem erheblichen Druckaufbau in dem in den Spalt 28 zwischen den beiden Wellen 1, 10 geförderten Schmieröl, der bewirkt, daß ein einwandfreier Transport des Schmieröles zu allen Schmierstellen erfolgt, die über den von diesem Spalt 28 gebildeten Kanal zu versorgen sind.

Die erwähnte Hülse ist einfach in ihrer Herstellung und auch leicht zu montieren. Bei dem dargestellten Ausführungsbeispiel ist sie mit dem äußeren Rand des Ringes 43 zwischen den äußeren Ring 47 des Wälzlagers, das am äußeren Ende der äußeren Welle 10 angeordnet ist, und einer benachbarten Anschlagfläche des Getriebegehäuses 5 eingespannt und verklebt. Der unmittelbar dem Ende der äußeren Welle 10 benachbarte Flansch 43 bildet zugleich eine Wand des Ringraumes 27, welche in die Hülse 41 übergeht, die sich in eine entsprechende Aussparung 48 an der Innenseite der Hohlwelle 10 hineinerstreckt. Diese Aussparung 48 nimmt die Hülse 41 auf, so daß ihre Innenseite im wesentlichen mit dem Bohrungsdurchmesser des anschließenden Abschnittes der Hohlwelle 10 fluchtet und demgemäß ein Spalt konstanter Breite zwischen der inneren Welle 1 und der Hülse 41 bzw. der äußeren Welle 10 eingehalten wird. Zugleich hat diese Anordnung den Vorteil, daß die Hülse 41 nicht die Baulänge des Getriebes vergrößert.

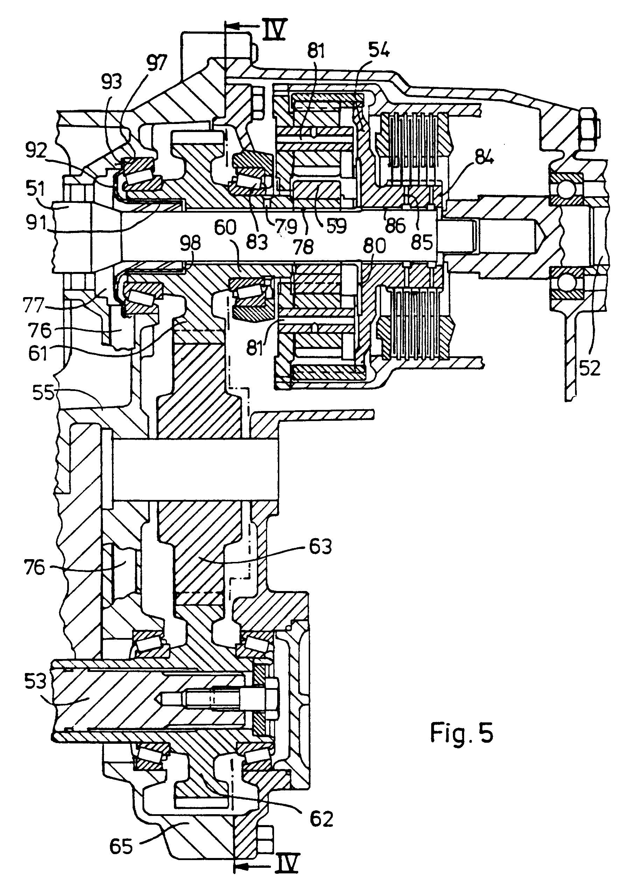

Auch bei dem Getriebe nach den Fig. 4 und 5 handelt es sich um ein Verteilergetriebe mit einem als Planetensatz ausgebildeten Differential, das das von der Eingangswelle 51 gelieferte Drehmoment auf eine erste Ausgangswelle 52 und eine zweite Ausgangswelle 53 überträgt. Der Unterschied zwischen den beiden Getrieben besteht im wesentlichen darin, daß die koaxial zur Eingangswelle 51 angeordnete Hohlwelle 60, die an ihrem einen Ende das Sonnenrad 59 des Planetensatzes trägt und zur Übertragung des Drehmomentes auf die zweite Ausgangswelle 53 dient, nicht mit einem Kettenrad, sondern mit einem Stirnrad 61 versehen ist, das über ein Zwischenrad 63 mit einem auf der zweiten Ausgangswelle 53 befestigten Stirnrad 62 zusammenwirkt. Demgemäß steht hier keine Kette als Transportmittel für das Schmieröl zur Verfügung. Stattdessen wird hier die Pumpwirkung der Zahnräder zum Transport des Schmieröles ausgenutzt.

Wie aus Fig. 4 ersichtlich, sind im Getriebegehäuse 55 die beiden Stirnräder 62, 63 annähernd in gleicher Höhe nebeneinander angeordnet und tauchen etwa bis zu ihren Achsen in das sich im Getriebegehäuse 55 befindende Schmieröl ein, dessen Spiegel durch die Linie 71 angedeutet ist. Normalerweise haben die Zahnräder 62, 63 die durch die Pfeile 73, 74 wiedergegebenen Drehrichtung, so daß sich ihre in den Schmierölsumpf 72 eintauchenden Abschnitte gegeneinander bewegen. Infolgedessen entsteht zwischen den beiden Zahnrädern 62, 63 ein Druckraum 75, von dem aus ein Kanal 76 zu einem Ringraum 77 fürht, der sich am Ende der Hohlwelle 60 befindet und wiederum die innere Eingangswelle 51 umgibt. Die dem Ende der Hohlwelle 60 benachbarte Wand des Ringraumes 77 wird wiederum von dem Flansch 92 einer Hülse 91 gebildet, die ebenso ausgebildet ist wie die anhand Fig. 3 beschriebene Hülse und auch in gleicher Weise dadurch im Getriebegehäuse 55 befestigt ist, daß der Rand ihres Ringes 93 zwischen dem äußeren Ring 97 eines am Ende der Hohlwelle 60 angeordneten Wälzlagers und einer entsprechenden Schulter im Getriebegehäuse 55 eingespannt ist. Auch ragt die Hülse 91 wieder in eine entsprechende Aussparung 98 hinein, die sich am Ende der Hohlwelle 60 an deren Innenseite befindet.

Das Getriebegehäuse 55 weist Wandungsabschnitte 65, 66 auf, die sowohl dem Kopfkreis als auch den Seitenflächen der Zahnräder 62, 63 dicht genug benachbart sind, um ein Fördern des Schmieröles über den Druckraum 75, den in das Getriebegehäuse 55 integrierten Kanal 76 bis in den Ringraum 77 zu bewirken, an den der Spalt 78 zwischen den beiden zueinander koaxial angeordneten Wellen 51, 60 anschließt. Dabei reicht es wiederum aus, wenn das den Ringraum 77 erreichende Schmieröl im wesentlichen drucklos ist, weil es dann durch die Wirkung der wiederum mit eine Pumpwirkung entfaltenden Stegen, Nuten oder sonstigen Hindernissen versehenen Hülse 91 in den Spalt 78 hineingepumpt wird. In diesem Falle hat die koaxial äußere Welle 60 radiale Bohrungen 79, über die Schmieröl einem auf d der äußeren Welle 60 angeordneten Wälzlager 83 zugeführt wird. Weiterhin ist hier am Ende der äußeren Welle 60, die das Sonnenrad 59 des Planetensatzes trägt, wiederum ein Spalt 80 vorhanden, von dem aus das Schmieröl zu weiteren Schmierstellen 81 gelangt. Auch hat die auf das Ende der inneren Welle 51 aufgesteckte Nabe 84 des Planetenradträgers 54 radiale Bohrungen 85, die als Schmiermittelkanäle dienen und mit Schmiermittelkanälen 86 in Verbindung stehen, die von ausgesparten Zähnen der zwischen der Nabe 84 des Planetenradträgers 54 und dem Ende der inneren Welle 51 vorhandenen Keilverzahnung gebildet werden.

Auch hier zeigt sich wieder, daß die Erfindung vielerlei Möglichkeiten bietet, auf einfache Weise das Schmieröl an jede beliebige Stelle zu fördern, wo es gebraucht wird, und zwar selbst unter Druck, ohne das äußere Druckpumpen verwendet werden. Dabei versteht es sich, daß bei Bedarf auch unmittelbar an den Druckraum einer von einem oder mehreren Zahnrädern gebildeten Schmierölpumpe zu besonderen Schmierstellen führende Kanäle anschließen oder von dem den Druckraum mit dem Ringraum verbindenden Kanal abzweigen könnten.

## Patentansprüche

1. Getriebe, insbesondere Verteilergetriebe für Vierrad-Antriebe von Kraftfahrzeugen, mit mindestens zwei zueinander konzentrischen Wellen (1, 10; 51, 60) und einer Einrichtung zur Schmierölversorgung, die zu den einzelnen Schmierstellen (81) führende Kanäle (28, 29; 78, 79, 86) und Mittel zum Zuführen des Schmieröls zu diesen Kanälen (28, 29; 78, 79, 86) umfaßt, wobei ein Kanal von dem Spalt (28; 78) zwischen den beiden konzentrischen Wellen (1, 10; 51, 60) gebildet wird, der an einem Ende der äußeren der beiden Wellen (1, 10; 51, 60) in einen die innere Welle (1; 51) umgebenden Ringraum (27; 77) mündet, der vom Getriebegehäuse (5; 55) der inneren Welle (1; 51) und der Stirnseite der äußeren der beiden Wellen (1, 10; 51, 60) gebildet ist und an den die Mittel zum Zuführen des Schmieröles angeschlossen sind, und die äußere Getriebewelle (10; 60) an der dem Ringraum gegenüberliegenden Seite zu Schmierstellen führende, radiale Durchbrechungen (29; 79) aufweist, dadurch gekennzeichnet, daß am Übergang von dem Ringraum (27; 77) zu dem Spalt (28; 78) eine Hülse (41; 91) in einer ringförmigen Aussparung (48; 98) der äußeren Welle (10; 60) angeordnet ist, deren Innenseite mit einer schraubenförmigen Profilierung (44) versehen ist und die die innere Welle (1; 51) auf einem Teil ihrer Länge umgibt, wobei die Hülse (41; 91) am Getriebegehäuse (5; 55) drehfest gehalten ist.

2. Getriebe nach Anspruch 1, dadurch gekennzeichnet, daß die Hülse (41; 91) von einem im Getriebegehäuse (5; 55) befestigten Bauteil gebildet ist, das einen die Wand des Ringraumes (27; 77) bildenden Flansch (42) aufweist.

3. Getriebe nach Anspruch 2, dadurch gekennzeichnet, daß der Rand des Flansches (42) zwischen dem äußeren Ring (47; 97) eines am Ende der äußeren Welle (10; 60) angeordneten Wälzlagers und einem benachbarten Abschnitt des Getriebegehäuses (5; 55) eingespannt und mit dem Gehäuse (5; 55) verklebt ist.

4. Getriebe nach Anspruch 2 oder 3, dadurch gekennzeichnet, daß die Hülse (41) als Verbundbauteil aus einem nicht-metallischen Werkstoff, vorzugsweise einem Elastomer und einem den Flansch bildenden metallischen Ring (43), vorzugsweise aus Stahl, ausgebildet ist.

5. Getriebe nach einem der vorhergehenden Ansprüche, dadurch gekennzeichnet, daß die Mittel zum Zuführen des Schmieröles förderwirksame Getriebeelemente (13; 62, 63) umfassen, die über in das Getriebegehäuse (5; 55) integrierte Hohlräume (25, 26; 75, 76) mit dem Ringraum (27; 77) in Verbindung stehen.

6. Getriebe nach Anspruch 5, dadurch gekennzeichnet, daß die äußere Welle (10) mit einem Kettenantrieb versehen ist, dessen Kette (13) bis in den Ölsumpf (22) des Getriebegehäuses (5) reicht, und neben dem am Ende der äußeren Welle (10) angeordneten Kettenrad (11) dieses Kettenantriebes im Getriebegehäuse (5) eine zur Achse der äußeren Welle (10) im wesentlichen parallele Ölfangrinne (25) angeordnet ist, die mit dem Ringraum (27) mit Gefälle in Verbindung steht.

7. Getriebe nach Anspruch 5, dadurch gekennzeichnet, daß mindestens einem in den Ölsumpf (72) des Getriebegehäuses (55) eintauchenden Zahnrad (62, 63) des Getriebes Gehäuseteile (65, 66) derart benachbart angeordnet sind, daß das Zahnrad (62, 63) als Ölpumpe wirkt, und der Druckraum (75) der Ölpumpe über in das Gehäuse integrierte Kanäle (76) mit dem Ringraum (77) in Verbindung steht.

8. Getriebe nach Anspruch 7, dadurch gekennzeichnet, daß die Ölpumpe zwei miteinander in Eingriff stehende Zahnräder (62, 63) umfaßt und sich der Druckraum (75) im Bereich zwischen den beiden Zahnrädern (62, 63) befindet.

9. Getriebe nach Anspruch 7 oder 8, dadurch gekennzeichnet, daß von den den Druckraum (75) mit dem Ringraum (77) verbindenden Kanälen (76) weitere zu Schmierstellen führende Kanäle abzweigen.

## Claims

1. Gearbox, particularly a transfer gearbox for four-wheel drives for motor vehicles, comprising at least two shafts (1, 10; 51, 60) concentric to one another and a lubricating oil supply device which comprises ducts (28, 29; 78, 79, 86) leading to the individual lubrication points (81), and means for feeding the lubricating oil to said ducts (28, 29; 78, 79, 86), one duct being formed by the gap (28, 78) which exists between the two concentric shafts (1, 10; 51, 60) and leads out at one end of the outer of the two shafts (1, 10; 51, 60) into an annular space (27; 77) which surrounds the inner shaft (1; 51) and is formed by the gearbox casing (5; 55), the inner shaft (1; 51) and the end face of the outer of the two shafts (1, 10; 51, 60) and to which the means for feeding the lubricating oil are connected, while at the end remote from the annular space the outer gearbox shaft (10; 60) is provided with radial apertures (29, 79) leading to lubrication points, characterised in that at the transition from the annular space (27, 77) to the gap (28; 78) a sleeve (41; 91) is disposed in an annular recess (48; 98) in the outer shaft (10; 60), and is provided on its inner side with helical profiling (44), said sleeve (41, 91) surrounding the inner shaft (1; 51) over a part of its length and being held and secured against rotation on the gearbox casing (5; 55).

2. Gearbox according to Claim 1, characterised in that the sleeve (41; 91) is formed by a component which is fastened in the gearbox casing (5; 55) and has a flange (42) forming the wall of the annular space (27; 77).

3. Gearbox according to Claim 2, characterised in that the edge of the flange (42) is clamped between the outer ring (47; 97) of a rolling-contact bearing, disposed at the end of the outer shaft (10; 60), and a neighbouring portion of the gearbox casing (5; 55) and is bonded to the casing (5; 55).

4. Gearbox according to Claim 2 or 3, characterised in that the sleeve (41) is in the form of a composite component of nonmetallic material, preferably an elastomer, and a metal ring (43), preferably of steel, forming the flange.

5. Gearbox according to one of the preceding claims, characterised in that the means for feeding the lubricating oil comprise drive elements (13; 62, 63) having a delivery action and communicating with the annular space (27; 77) by way of cavities (25, 26; 75, 76) integrated into the gearbox casing (5; 55).

6. Gearbox according to Claim 5, characterised in that the outer shaft (10) is provided with a chain drive, the chain (13) of which extends into the oil sump (22) of the gearbox casing (5), and an oil collection channel (25), which is substantially parallel to the axis of the outer shaft (10) and is in communication with the annular space (27) via an incline, is disposed in the gearbox casing (5) next to the chain wheel (11) disposed at the end of the outer shaft (10) in said chain drive.

7. Gearbox according to Claim 5, characterised in that casing parts (65, 66) are disposed so close to at least one gear (62, 63), which dips into the oil sump (72) of the gearbox casing (55), that the gear (62, 63) will act as an oil pump, and the pressure space (75) of the oil pump is in communication with the annular space (77) by way of ducts (76) integrated into the casing.

8. Gearbox according to Claim 7, characterised in that the oil pump comprises two gears (62, 63) meshing with one another and the pressure space (75) is situated in the region between the two gears (62, 63).

9. Gearbox according to Claim 7 or 8, characterised in that other ducts leading to lubrication points are branched off from the ducts (76) connecting the pressure chamber (75) to the annular chamber (77).

## Revendications

1. Transmission, en particulier transmission de distribution pour entraînement de véhicules à quatre roues motrices, avec au moins deux arbres concentriques l'un par rapport à l'autre (1,10;51,60) et un dispositif d'alimentation pour huile de lubrification qui comprend des canaux (28,29;78,79,86) conduisant aux différents points de lubrification (81) et des moyens d'amener l'huile de lubrification dans ces canaux (28,29;78,79,86), un canal formé par l'interstice (28;78) entre les deux arbres concentriques (1,10;51,60) débouchant, à l'une des extrémités du plus extérieur des deux arbres (1,10;51,60), dans un espace annulaire (27;77) entourant l'arbre interne (1;51) et délimité par le carter de transmission (5;55) de l'arbre interne (1;51) et la face frontale du plus extérieur des deux arbres (1,10;51,60) et auquel les moyens pour amener l'huile de lubrification sont raccordés, et l'arbre de transmission externe (10;60) présentant, du côté opposé à l'espace annulaire, des passages (29;79) radiaux menant aux points de lubrification, caractérisée en ce qu'il est prévu, au niveau de la transition entre l'espace annulaire (27;77) et l'interstice (28;78), un manchon (41;91) logé dans un évidement annulaire (48;98) de l'arbre externe (10;60), dont la face intérieure est dotée d'un profil (44) en forme de vis et qui entoure l'arbre intérieur (1;51) sur une partie de sa longueur, le manchon (41;91) étant maintenu fixe en rotation sur le carter de transmission (5 ; 55).

2. Transmission selon la revendication 1, caractérisée en ce que le manchon (41;91) consiste en un composant fixé dans le carter de transmission (5;55), qui présente une bride (42) formant la paroi de l'espace annulaire (27;77).

3. Transmission selon la revendication 2, caractérisée en ce que le bord de la bride (42) est serré entre la bague externe (47;97) d'un palier à roulement disposé à l'extrémité de l'arbre externe (10;60) et une portion voisine du carter de transmission (5;55) et est collé au carter (5;55).

4. Transmission selon la revendication 2 ou 3, caractérisée en ce que le manchon (41) consiste en un élément composite fabriqué en un matériau non métallique, de préférence un élastomère, et un anneau métallique (43) formant la bride, de préférence en acier.

5. Transmission selon l'une des revendications précédentes, caractérisée en ce que les moyens pour amener l'huile de lubrification comprennent des éléments de transmission (13;62,63) assurant une fonction de transport, qui sont reliés a l'espace annulaire (27;77) par des cavités (25,26;75,76) intégrées au carter de transmission (5;55).

6. Transmission selon la revendication 5, caractérisée en ce que l'arbre externe (10) est doté d'une transmission par chaîne, dont la chaîne (13) parvient jusque dans le carter à huile (22) du carter de transmission (5), et en ce que près de la roue à chaîne (11) de cette transmission à chaîne, disposée à l'extrémité de l'arbre extérieur (10), dans le carter de transmission (5), est prévue une rigole de retenue d'huile (25) essentiellement parallèle à l'axe de l'arbre extérieur (10) et communicant avec l'espace annulaire (27) avec une déclivité.

7. Transmission selon la revendication 5, caractérisée en ce que des éléments de carter (65,66) sont disposés si près d'au moins une roue dentée (62,63) de la transmission plongeant dans le carter d'huile (72) du carter de transmission (55), que la roue dentée (62,63) se comporte comme une pompe à huile, et en ce que la chambre de refoulement (75) de la pompe à huile communique avec l'espace annulaire (77) par des canaux (76) intégrés au carter.

8. Transmission selon la revendication 7, caractérisée en ce que la pompe à huile comporte deux roues dentées (62,63) en prise l'une avec l'autre et en ce que la chambre de refoulement (75) se trouve dans la région comprise entre les deux roues dentées (62,63).

9. Transmission selon la revendication 7 ou 8, caractérisée en ce que d'autres canaux menant aux points de lubrification partent des canaux (76) reliant la chambre de refoulement (75) à l'espace annulaire (77).
